# EUROPEAN PATENT SPECIFICATION

(11) **EP 4 223 118 B1**
(45) Date of publication and mention of the grant of the patent: **15.07.2026**
(21) Application number: 22205817.4
(22) Date of filing: 07.11.2022
(51) Int. Cl.: A01M 7/00, G01F 13/00, G01F 22/00, G01F 25/00

(54) **MULTI-SLOT TABLE**
MEHRSCHLITZTISCH
TABLE À FENTES MULTIPLES

(30) Priority: 02.02.2022 PL 44028622
(43) Date of publication of application: 09.08.2023
(73) Proprietor: Uniwersytet Przyrodniczy w Poznaniu, 60-637 Poznan (PL)
(72) Inventor: WOJCIESZAK, Dawid, 62-023 Szczytniki (PL); PAWLOWSKI, Artur, 87-850 Borzymowice (PL); PRZYBYL, Jacek, 63-000 Koszuty (PL)
(74) Representative: Augustyniak, Magdalena Anna

(56) References cited:
- EP-A2- 0 145 144
- CN-A- 101 210 861
- DE-A1- 19 829 594
- DE-U1- 8 711 431
- IT-A1- 201800 009 734
- US-A- 5 319 988

## Description

The object of the invention is a multi-slot table that serves as a test stand for the assessment of the output of nozzles and of the technical performance of sprayer nozzles, in particular those used in agriculture.

Agricultural sprayers are used to apply fluid substances, usually plant protection products, less often fluid fertilisers, in a sprayed form; therefore, they are subject to specific inspection and servicing rules. Periodically, usually every three years, sprayers must undergo inspections of pump operation and nozzle performance in terms of working liquid rate and the uniformity of coverage of the surface to be protected with the liquid. Pesticide application equipment must be safe for people and the environment. It should guarantee full effectiveness of the operation of pesticide application by ensuring a correct performance that enables precise addition and uniform distribution of pesticides. The aim here is to protect the natural environment and agricultural crops against being excessively burdened with residues from chemical plant protection products. The use of chemical plant protection products with faulty equipment may pose a risk of creating point-source contamination and health hazards to the operator and the consumer.

The agricultural nozzle is tested by the manufacturer with regard to the output and the quality of coverage of the surface to be protected, while on the farm where the sprayer is operated most often there are no appropriate devices to perform the relevant tests. Moreover, standards only provide general guidance as to when a sprayer requires a nozzle change or other maintenance measures. The need to repair the sprayer is indicated by the amplitude of the transverse or longitudinal distribution of the spraying liquid. In the case of transverse distribution differences of 10% and in the case of longitudinal distribution of 8% disqualify a sprayer.

Manual or electronic slot tables are used for the assessment of the uniformity of spraying. Slot tables, also called multi-slot tables, consist of test profiles so called slots with a width of 100 mm, depth equal to or greater than 80 mm, and length of at least 1,500 mm. The width of a manual slot table should amount to at least 3,000 mm, while the width of the measuring trolley in an electronic slot table should be 800 mm. A test profile so called slot is equipped with a drain hole with a measuring vessel.

Slot tables are essential tools for the assessment of the quality of work of nozzles in agricultural sprayers and users and laboratories point to them as the preferred tools for assessing the performance of these machines.

A table made of test profiles so called slots is placed perpendicular to the axis of the sprayer filed boom. Nozzles placed above the slot table spray the table, and the working liquid or water flows down via the test profiles so called slots to the measuring vessels. The amount of liquid collected in the vessels makes it possible to assess the quality of the nozzle work. Despite recommendations that both the transverse and longitudinal distribution of the spraying should be subject to the assessment, no valid assessment of the longitudinal distribution of the spraying is carried out in practice.

Hypothetically speaking, the assessment of the uniformity of the longitudinal distribution would be possible to perform by lining up trays along the axis of the sprayer's work, however, this measurement would not render a reliable and repeatable result under non-laboratory conditions.

Due to legal regulations, using a slot table is currently the only method of assessing the quality of the operation of sprayer nozzles. Standard slot tables only allow for the determination of the transverse non-uniformity of the liquid distribution (CV). Furthermore, measurements performed on slot tables of known design exhibit significant measurement errors.

The solution according to PL193975 aids the assessment of the quality of nozzle work, with the disclosed design being a static slot table with a revolving head that tests nozzles placed above it. Nozzles are placed in the rotating magazine of the head, and then individual sprayer nozzles are tested by adding water onto the slot table placed below.

Another example of a multi-slot table is provided by CN101210861A, disclosing a test bench for a single nozzle being movable across test profiles arranged in a single measuring section.

The assessment of the operation of known devices for the testing of sprayers and the analysis of results of measurements made with them lead to the conclusion that they allow at most to measure the efficiency of nozzles in the direction transverse to the direction of operation of the sprayer, and the measurement of the longitudinal distribution is not possible. Moreover, static measurements do not allow for the consideration of the mechanics and dynamic characteristics of spraying alone, because they do not simulate the momentum of the device and the disturbances of the stream of the spraying liquid resulting from the movement of the truck with the sprayer. Due to the movement of the unit, the stream of the spraying liquid is only for a moment over each point of the sprayed surface and not even for several seconds as in the tests.

There is also very little information available about the influence of the air stream resulting from the movement of the unit during its work on the longitudinal distribution of the fallout of the sprayed liquid. It has been established that in the presence of an acceptable wind speed (3 m·s⁻¹) and the most common working speeds (7-12 km·h⁻¹), the speed of the air influences the behaviour of spraying liquid drops. This may cause a strong deformation of the sprayed liquid, disrupt the process of application of drops onto the surfaces that are being sprayed, and increase the drift of the working liquid.

Therefore, it was advisable to develop a device that would allow to measure of the uniformity of the distribution of the spraying liquid also taking into account the direction of movement of the nozzles or of the working boom of the sprayer.

The new structure of the slot table will make it possible to determine the influence these factors have on the quality of work of the sprayer. As a result of the use of the moving boom, it will become simple to simulate the movement of the unit during the test.

The proposed construction solution will make it possible to measure longitudinal non-uniformity, which is a completely new functionality. In addition to that, it will be possible to make measurements of transverse non-uniformity with much greater precision than has been possible so far. The slot table will enable measurements to be made at different working speeds and it will also make it possible to reflect the natural conditions of a chemical plant protection treatment, taking multiple scenarios into account.

The multi-slot table according to the invention comprises at least three, preferably five, measuring sections mounted on a support frame, each of which is a set of longitudinal test profiles so called slots closed at least on one side, with measuring vessels detachably connected to them. It is preferable that the measuring vessels are mounted on a rail that slides into the guides of each measuring section. Along the mutually juxtaposed measuring sections at least one guide is mounted, on which a spraying boom, with sockets for spraying nozzles located in its lower plane, is slidably placed. Spraying nozzles that are being inspected are screwed into the sockets made in the spraying boom, they are supplied with the working liquid by a hydraulic system made up of hoses connecting the nozzles with a pump, preferably a multi-stage pump, which is immersed in a tank of liquid, preferably attached to the support frame. It is preferable that the maximum operating pressure of the pump does not exceed 5.5 bar. In another embodiment, in the place of a pump a solenoid valve with a regulated flow is attached to the hydraulic installation, to which the water supply installation is connected.

Each measuring section is made of corrosion-resistant material, preferably stainless steel, with a preferable thickness of at least 2.5 mm, while the dimensions of each measuring section are less than 3,690 mm in length and 1,000 mm in width. In each measuring section, along its length there are test profiles so called slots with transverse dimensions of 100 x 80 mm, the bottom of which is embossed so that it is divided into two zones inclined at an angle of not less than 2°, preferably 5° to the horizontal. The bottom of each slot is additionally inclined towards the measuring vessel, and the angle of inclination of the bottom in the longitudinal direction is not less than 2° and not more than 10°.

The spraying boom is permanently and inseparably connected by at least one arm to the trolley that operates together with the guide of the spraying boom. A toothed bar is mounted along at least one guide of the spraying boom. An electric motor with a rack that rests on the toothed bar and works together with it, is built into the trolley.

The spraying boom has at least three sockets for spraying nozzles formed in its lower plane, into which the agricultural sprayer nozzles to be tested are mounted by any known method.

It is preferable that the support frame is equipped with transport wheels, preferably lockable for the duration of the tests.

The pump, the solenoid valve, and at least one motor are connected with known conductive components and electrically controlled fittings.

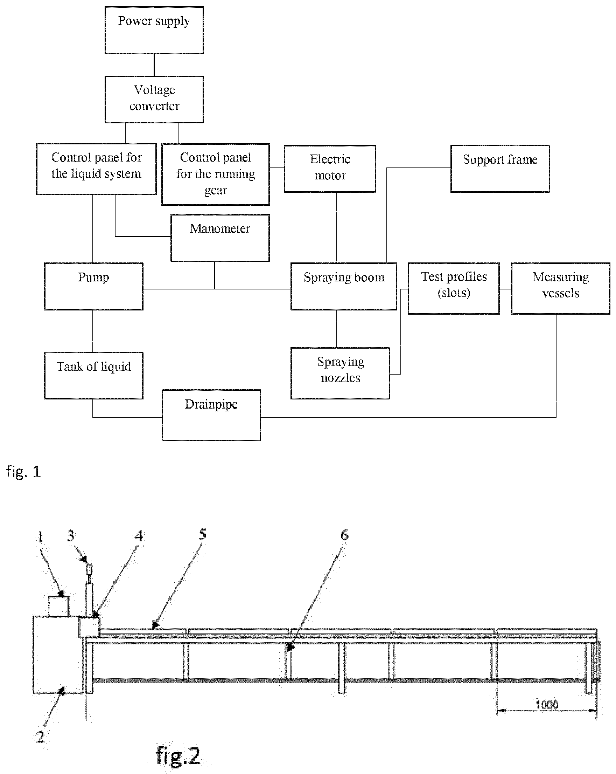

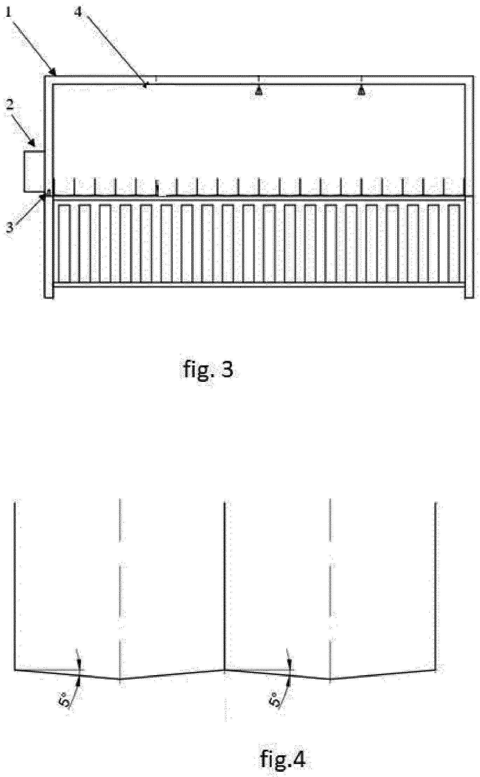

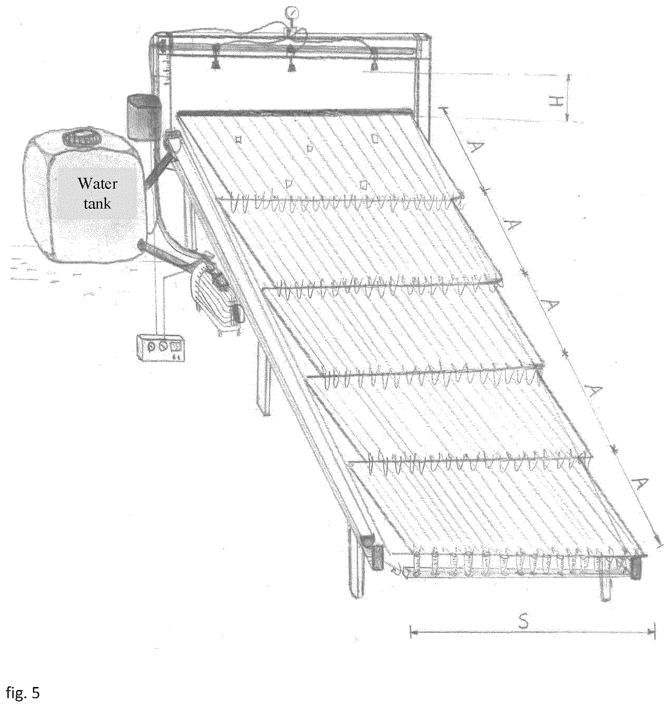

The multi-slot table according to the invention is shown in fig. 1 as a block diagram of the multi-slot table, fig. 2 shows the slot-table in side view, fig. 3 shows the multi-slot table in front view; fig. 4 shows a cross-section through the test profiles (slots), fig. 5 shows the table according to the invention in general view in a preferable embodiment.

### Example I

The multi-slot table according to the invention comprises five measuring sections 5 mounted on a support frame, each of which is a set of longitudinal test profiles so called slots with measuring vessels 6 detachably connected to them. Measuring vessels 6 are mounted on a rail that slides into the guides of each measuring section 5. Along the mutually juxtaposed measuring sections 6 a guide is mounted, on which a spraying boom 3, with sockets for spraying nozzles located in its lower plane, is slidably placed. Spraying nozzles to be inspected are screwed into the sockets made in the spraying boom 3, which are supplied with the working liquid by a hydraulic system made up of hoses connecting the jets with a multi-stage pump 1, which is immersed in a tank 2 of liquid attached to the support frame. The maximum operating pressure of the pump does not exceed 5.5 bar.

Each measuring section 5 is made of corrosion-resistant material, i.e. stainless steel with a thickness of 2.5 mm, while the dimensions of each measuring section 5 amount: 3,690 mm in length and 1,000 mm in width. In each measuring section 5, along its length, are test profiles so called slots with transverse dimensions of 100 x 80 mm, the bottom of which is embossed so that it is divided into two zones inclined at an angle of 5° to the horizontal. The bottom of each slot is additionally inclined towards the measuring vessel, and the angle of the inclination of the bottom in the longitudinal direction being not less than 2°.

The spraying boom 3 is permanently and inseparably connected by an arm to the trolley 4 that works together with the guide of the spraying boom 3. A toothed bar is mounted along the guide of the spraying boom 3 and an electric motor with a rack that rests on the toothed bar and works together with it, is built into the trolley 4.

The spraying boom 3 has sockets for spraying nozzles formed in its lower plane, into which the agricultural sprayer nozzles to be tested are mounted by any known method.

The support frame is equipped with transport wheels, lockable for the duration of the tests.

The pump, the solenoid valve, and the motor are connected with known conductive components and electrically controlled fittings.

### Example II

The multi-slot table according to the invention comprises five measuring sections 5 mounted on a support frame, each of which is a set of longitudinal test profiles so called slots with measuring vessels 6 detachably connected to them. Measuring vessels 6 are mounted on a rail that slides into the guides of each measuring section 5. Along the mutually juxtaposed measuring sections 5, guides are mounted, on which a spraying boom 3, with sockets for spraying nozzles placed in its lower plane, is slidably placed. Sprinkling nozzles to be inspected are screwed into the sockets made in the spraying boom 3, which are supplied with the working liquid by a hydraulic system made up of hoses connecting the nozzles with a solenoid valve that connects the device to the water supply.

Each measuring section 5 is made of corrosion-resistant material, i.e. stainless steel with a thickness of 2.5 mm, while the dimensions of each measuring section 5 amount: 3,690 mm in length and 1,000 mm in width. In each measuring section 5, along its length, are placed test profiles so called slots with transverse dimensions of 100 x 80 mm, the bottom of which is embossed so that it is divided into two zones inclined at an angle of 5° to the horizontal. The bottom of each slot is additionally inclined towards the measuring vessel, with the angle of inclination of the bottom in the longitudinal direction being not more than 10°.

The spraying boom 3 is permanently and inseparably connected by arms to the trolleys 4 that work together with the guides of the spraying boom 3. A toothed bar is mounted along the guides of the spraying boom 3 and electric motors with racks that rest on the toothed bars and work together with them, are built into the trolleys 4.

The spraying boom 3 has sockets for spraying nozzles formed in its lower plane, into which the agricultural sprayer nozzles to be tested are mounted by any known method.

The support frame is equipped with transport wheels, lockable for the duration of the tests.

The pump, the solenoid valve, and the motor are connected with known conductive components and electrically controlled fittings.

## Claims

1. A multi-slot table comprising at least one set of test profiles, so called slots with measuring vessels attached to them, **characterised in that** it comprises at least three, preferably five, measuring sections (5) mounted on the support frame, each of which is one of the sets of longitudinal test profiles closed at least on one side, with the measuring vessels (6) detachably connected to them, along the mutually juxtaposed measuring sections (5) at least one guide is mounted, on which at least one trolley (4) with at least one arm connected to a spraying boom (3) is slidably placed, with sockets for spraying nozzles being placed in its lower plane, the spraying nozzles to be inspected can be screwed into the sockets made in the spraying boom (3), and are configured to be supplied with a working liquid by a hydraulic system made up of hoses connecting the spraying nozzles with a pump (1), preferably a multi-stage pump which can be immersed in a tank (2) of liquid, preferably attached to a support frame, or a hydraulic system connectable to a water supply by a solenoid valve with a regulated flow.

2. The table according to claim 1, **characterised in that** the maximum operating pressure of the pump (1) does not exceed 5.5 bar.

3. The table according to claim 1 or 2, **characterised in that** the measuring vessels (6) are mounted on a rail that slides into guides of each measuring section (5).

4. The table according to claim 1 or 2 or 3, **characterised in that** each measuring section (5) is made of corrosion-resistant material.

5. The table according to claim 4, **characterised in that** each measuring section (5) is made of stainless steel.

6. The table according to claim 5, **characterised in that** each measuring section (5) is made of stainless steel with a thickness of at least 2.5 mm, while the dimensions of each measuring section (5) are less than 3,690 mm in length and 1,000 mm in width.

7. The table according to claim 1 or 2 or 3 or 4 or 5 or 6, **characterised in that** in each measuring section (5), along its length, are placed test profiles with transverse dimensions of 100 x 80 mm, the bottom of which is embossed so that it is divided into two zones inclined at an angle of not less than 2° to the horizontal and the bottom of each test profile is additionally inclined towards the measuring vessel (6), and the angle of inclination of the bottom in the longitudinal direction is not less than 2° and not more than 10°.

8. The table according to claim 7, **characterised in that** the angle of the transverse inclination of the bottom of the test profile amounts to 5°

9. The table according to claim 1 or 2 or 3 or 4 or 5 or 6 or 7 or 8, **characterised in that** the support frame is equipped with transport wheels, preferably lockable for the duration of the tests.

10. The table according to any of the above claims, **characterised in that** the pump, the solenoid valve, and at least one motor are connected with known conductive components and electrically controlled fittings.

## Patentansprüche

1. Ein Mehrsteckplatz-Tisch, der mindestens einen Satz von Testprofilen umfasst, s. g. Steckplätze, an denen die Messgefäße angebracht sind, **dadurch gekennzeichnet, dass** er mindestens drei, vorzugsweise fünf, am Tragrahmen montierte Messabschnitte (5) umfasst, wobei jeder davon einen zumindest auf einer Seite geschlossenen Satz von länglichen Testprofilen darstellt, an denen die Messgefäße (6) demontierbar befestigt sind, wobei entlang der nebeneinander angeordneten Messabschnitte (5) mindestens eine Führung montiert ist, auf der mindestens ein Schlitten (4) mit mindestens einem an einer Sprühleiste (3) befestigten Arm verschiebbar angeordnet ist, mit Aufnahmen für die Sprühdüsen, die in der unteren Ebene angeordnet sind, wobei die zu prüfenden Sprühdüsen in die in der Sprühleiste (3) ausgebildeten Aufnahmen eingeschraubt und so ausgelegt sind, dass sie von einem Hydrauliksystem mit einer Arbeitsflüssigkeit versorgt werden, wobei das System aus Schläuchen besteht, welche die Sprühdüsen mit einer Pumpe (1), vorzugsweise einer mehrstufigen Pumpe verbinden, die in einem Behälter (2) mit Flüssigkeit eingetaucht werden kann, der vorzugsweise an einem Tragrahmen befestigt ist, oder an einem Hydrauliksystem, das über ein Magnetventil mit geregeltem Durchfluss an eine Wasserversorgung angeschlossen ist.

2. Ein Tisch nach Anspruch 1, **dadurch gekennzeichnet, dass** der maximale Betriebsdruck der Pumpe (1) 5,5 bar nicht überschreitet.

3. Ein Tisch nach Anspruch 1 oder 2, **dadurch gekennzeichnet, dass** die Messgefäße (6) auf einer Schiene montiert sind, die in die Führungen eines jeden Messabschnitts (5) gleitet.

4. Ein Tisch nach Anspruch 1 oder 2 oder 3, **dadurch gekennzeichnet, dass** jeder Messabschnitt (5) aus korrosionsbeständigem Material ausgeführt ist.

5. Ein Tisch nach Anspruch 4, **dadurch gekennzeichnet, dass** jeder Messabschnitt (5) aus rostfreiem Stahl ausgeführt ist.

6. Ein Tisch nach Anspruch 5, **dadurch gekennzeichnet, dass** jeder Messabschnitt (5) aus rostfreiem Stahl mit einer Dicke von mindestens 2,5 mm ausgeführt ist, wobei die Maße eines jeden Messabschnitts (5) weniger als 3,690 mm in der Länge und 1,000 mm in der Breite betragen.

7. Ein Tisch nach Anspruch 1 oder 2 oder 3 oder 4 oder 5 oder 6, **dadurch gekennzeichnet, dass** in jedem Messabschnitt (5) entlang ihrer Länge Testprofile mit Querschnittmaßen von 100 x 80 mm angeordnet sind, deren Boden so geprägt ist, dass er in zwei Zonen unterteilt ist, die in einem Winkel von mindestens 2° zur horizontalen Ebene geneigt sind, und der Boden jedes Testprofils zusätzlich zum Messgefäß (6) hin geneigt ist, wobei der Neigungswinkel des Bodens in Längsrichtung mindestens 2° und höchstens 10° beträgt.

8. Ein Tisch nach Anspruch 7, **dadurch gekennzeichnet, dass** der Querneigungswinkel des Bodens am Prüfprofil 5° beträgt.

9. Ein Tisch nach Anspruch 1 oder 2 oder 3 oder 4 oder 5 oder 6 oder 7 oder 8, **dadurch gekennzeichnet, dass** der Tragrahmen mit Transportrollen ausgestattet ist, die vorzugsweise für die Dauer der Versuche verriegelbar sind.

10. Ein Tisch gemäß einem der vorstehenden Ansprüche, **dadurch gekennzeichnet, dass** die Pumpe, das Magnetventil und mindestens ein Motor über bekannte stromleitende Komponenten und elektrisch gesteuerte Anschlüsse miteinander verbunden sind.

## Revendications

1. Table multi-fentes comprenant au moins un ensemble de profils d'essai, dits fentes, auxquels sont fixés des récipients de mesure, **caractérisée en ce qu'**elle comprend au moins trois, de préférence cinq, sections de mesure (5) montées sur un châssis de support, chacune d'entre elles constituant l'un des ensembles de profils d'essai longitudinaux fermés au moins d'un côté, lesdits récipients de mesure (6) étant reliés de manière amovible à ceux-ci, le long des sections de mesure (5) disposées côte à côte étant montée au moins une glissière, sur laquelle est monté de manière coulissante au moins un chariot (4) muni d'au moins un bras relié à une rampe de pulvérisation (3), des logements destinés à recevoir des buses de pulvérisation étant disposés dans son plan inférieur, les buses de pulvérisation à contrôler pouvant être vissées dans lesdits logements réalisés dans la rampe de pulvérisation (3) et étant configurées pour être alimentées en liquide de travail par un système hydraulique constitué de tuyaux reliant les buses de pulvérisation à une pompe (1), de préférence une pompe multi-étagée pouvant être immergée dans un réservoir (2) de liquide, de préférence fixé au châssis de support, ou par un système hydraulique pouvant être raccordé à une alimentation en eau au moyen d'une électrovanne à débit réglé.

2. Table selon la revendication 1, **caractérisée en ce que** la pression de fonctionnement maximale de la pompe (1) ne dépasse pas 5,5 bar.

3. Table selon la revendication 1 ou 2, **caractérisée en ce que** les récipients de mesure (6) sont montés sur un rail s'insérant de manière coulissante dans des guides de chaque section de mesure (5).

4. Table selon la revendication 1 ou 2 ou 3, **caractérisée en ce que** chaque section de mesure (5) est réalisée en un matériau résistant à la corrosion.

5. Table selon la revendication 4, **caractérisée en ce que** chaque section de mesure (5) est réalisée en acier inoxydable.

6. Table selon la revendication 5, **caractérisée en ce que** chaque section de mesure (5) est réalisée en acier inoxydable d'une épaisseur d'au moins 2,5 mm, tandis que les dimensions de chaque section de mesure (5) sont inférieures à 3 690 mm en longueur et à 1 000 mm en largeur.

7. Table selon la revendication 1 ou 2 ou 3 ou 4 ou 5 ou 6, **caractérisée en ce que**, dans chaque section de mesure (5), sur toute sa longueur, sont disposés des profils d'essai ayant des dimensions transversales de 100 × 80 mm, dont le fond est embouti de manière à être divisé en deux zones inclinées selon un angle d'au moins 2° par rapport à l'horizontale, le fond de chaque profil d'essai étant en outre incliné vers le récipient de mesure (6), l'angle d'inclinaison du fond dans le sens longitudinal étant d'au moins 2° et d'au plus 10°.

8. Table selon la revendication 7, **caractérisée en ce que** l'angle d'inclinaison transversale du fond du profil d'essai est de 5°.

9. Table selon la revendication 1 ou 2 ou 3 ou 4 ou 5 ou 6 ou 7 ou 8, **caractérisée en ce que** le châssis de support est équipé de roues de transport, de préférence verrouillables pendant la durée des essais.

10. Table selon l'une quelconque des revendications précédentes, **caractérisée en ce que** la pompe, l'électrovanne et au moins un moteur sont reliés par des composants conducteurs connus et à des raccords commandés électriquement.
